# EUROPEAN PATENT SPECIFICATION

(11) **EP 4 726 821 B1**
(45) Date of publication and mention of the grant of the patent: **26.08.2026**
(21) Application number: 24206011.9
(22) Date of filing: 11.10.2024
(51) Int. Cl.: H01M 10/04, H01M 10/0585, H01M 50/105, H01M 50/536, H01M 50/54

(54) **A SYSTEM AND A METHOD FOR MANUFACTURING A SECONDARY BATTERY ASSEMBLY**
SYSTEM UND VERFAHREN ZUR HERSTELLUNG EINER SEKUNDÄRBATTERIEANORDNUNG
SYSTÈME ET PROCÉDÉ DE FABRICATION D'UN ENSEMBLE BATTERIE SECONDAIRE

(43) Date of publication of application: 15.04.2026
(73) Proprietor: LG Energy Solution, Ltd., Seoul 07335 (KR)
(72) Inventor: CHOI, Jin Hyeong, 34122 Daejeon (KR)
(74) Representative: BCKIP Part mbB

(56) References cited:
- KR-A- 20240 015 577
- US-A1- 2018 026 308
- US-A1- 2021 013 481
- US-A1- 2022 200 038

## Description

### TECHNICAL FIELD

The present invention relates to a system and a method for manufacturing a secondary battery assembly.

More particularly, the present invention relates to a system for manufacturing an electrode assembly capable of preventing an electrode tab of the electrode assembly from being damaged during a welding process.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classified based on a structure of an electrode assembly, which consists of a positive electrode, a separator, and a negative electrode. Typically, these assemblies fall into two categories firstly, a jelly-roll (or wound) electrode assembly, where long sheet-type positive and negative electrodes are wound together with separators in between, and secondly, a stack-type electrode assembly, where a plurality of positive electrodes and negative electrodes of a predetermined size are sequentially stacked on top of the other, having a separator interposed therebetween.

At a longitudinal end of the stack-type electrode assembly is provided a plurality of unit electrode tabs. The plurality of unit electrode tabs is to be welded together to form an electrode tab of the electrode assembly. Depending on the type of the electrode assembly, the electrode tab may be attached to an electrode lead for electric connection to an external battery terminal. In the process of attaching the electrode tab of the electrode assembly to the electrode lead, however, a defect may occur inside the electrode tab. To be more specific, the unit electrode tabs forming the electrode tab of the electrode assembly may be damaged. KR 2024 0015577 A, US 2021/013481 A1 and US 2018/026308 A1 disclose similar assembly systems for stacking cells.

Accordingly, it would be advantageous to develop a technology capable of addressing the above technical problem.

### SUMMARY OF THE INVENTION

It is an objective of the present invention to provide a system and method for manufacturing a secondary battery assembly, which can improve productivity of a system for manufacturing a secondary battery assembly. The problem is at least partially solved or alleviated by the subject-matter of independent claims, wherein further examples are incorporated in dependent claims.

One aspect of the present invention relates to a system for manufacturing a secondary battery assembly. The system may include: a stacking table configured to have a plurality of unit electrode cells having a unit electrode tab stacked thereon, to thereby form a cell stack with an electrode tab; a transfer unit configured to sequentially pick up a respective one of the plurality of unit electrode cells, move it to the stacking table and place on top of one another; and an adhesive spray unit configured to spray adhesive on at least a part of the unit electrode tab of the unit electrode cell placed at a top of the cell stack on the stacking table. The system may further include a control unit configured to control the adhesive spray unit to perform the adhesive-spraying operation after one unit electrode cell is placed on the stacking table and before a next unit electrode cell is placed.

Accordingly, the present invention enables the unit electrode tabs of the unit electrode cells to be bonded together to thereby form an electrode tab of the stack cell in a safe and secure manner, without damages.

In the system for manufacturing a secondary battery assembly, the cell stack may comprise a plurality of unit electrode cells, each of which is provided with its own electrode tab, namely, a unit electrode tab, at one end thereof.

The unit electrode tab may be formed on an electrode sheet, in a non-coated portion, by performing a process called notching. During the notching process, the portion of the non-coated portion may be selectively removed or cut, to thereby form a unit electrode tab in the non-coated portion. The process may be carried out by using precision tools, such as lasers or mechanical dies. Thus, the unit electrode tab may be a non-coated portion of the current collector layer, remaining after the notching process.

After the notching process, cutting of the electrode sheet may be performed for the stack-type electrode assembly. The positive and negative electrode sheets are cut into precise shapes and sizes suitable for stacking. Optionally, the separator may be also cut to a predetermined size appropriate for the cut unit electrodes.

The plurality of unit electrode cells is to be welded together to form a cell stack. Stacked unit electrode tabs of the plurality of unit electrode cells, as a bundle, form an electrode tab of the cell stack. Each unit electrode tab forming the electrode tab may have a specific shape, including rectangular, U-shaped, or V-shaped cuts, in order to optimize the attachment to an electrode lead and ensure a good electrical connection. Depending on the type of the electrode assembly, however, the electrode tab can be directly connected to an external battery terminal without requiring an electrode lead.

In a stacking process, the prepared positive electrode, separator, and negative electrode are alternately stacked in a precise order, so that a layered structure can be obtained, in which the positive electrode and the negative electrode are separated from each other by a separator. Meanwhile, the stacking process may be also carried out by using pre-assembled unit electrode cells, instead of stacking individual electrodes and separator.

The unit electrode cell forming the cell stack may have a laminated structure including one or more of layers of a positive electrode/a separator / a negative electrode. However, the laminated structure of a unit electrode cell is not limited thereto. For example, the unit electrode cell may be an A-type bi-cell having a laminated structure of a positive electrode/a separator/a negative electrode/a separator/a positive electrode or a C-type bi-cell having a laminated structure of a negative electrode/separator/a positive electrode/a separator/a negative electrode. Further, the unit electrode cell may be a Mono-cell having a laminated structure of a positive electrode/a separator/a negative electrode/a separator. Furthermore, the unit electrode cell may be a Half-cell having a laminated structure of a separator/a negative electrode/a separator. In the laminated structure, the electrodes and separator may be securely bonded together by heat and pressure applied during the process.

The stacking table may be any equipment having a flat surface configured to allow a plurality of unit electrode cells thereon. Particularly, a size of the flat surface may be larger than a unit electrode cell. However, the unit electrode tab of the unit electrode cell may also be positioned out of the flat surface of the stacking table. The transfer unit may be configured to sequentially transfer the plurality of unit electrode cells from a temporary storage, such as a tray, conveyor, etc. to the stacking table. The transfer unit picks up a respective one of the plurality of unit electrode cells and, after moving, places it on top of either the stacking table or the (partial) cell stack already placed on the stacking table. Placing the unit electrode cell should not affect the alignment of unit electrode cells in the cell stack.

The adhesive spray unit may be configured to spray adhesive on at least a part of the unit electrode tab of the unit electrode cell. The adhesive spray unit may further have a spray nozzle having a fine tip to control the flow and reduce overspray, ensuring the adhesive is applied only to the targeted area.

According to an embodiment of the present invention, the adhesive spray unit may be configured to spray the adhesive along a line perpendicular to a direction the unit electrode tab protrudes from the unit electrode cell.

Accordingly, the adhesive can be sprayed at an area of the unit electrode tab, which is located apart from both the lead connection area and the edge of the separator. In other words, the adhesive can be sprayed on the unit electrode tab, in-between the lead connection area and the separator, securing a certain distance from the lead connection area and, at the same time, from the separator.

According to an embodiment of the present invention, said at least a part of the unit electrode tab excludes a part on which a lead is to be formed.

Accordingly, the present invention improves an electrical property of connection between the electrode tab and a lead/an external battery terminal. The connection is avoided from having a high electrical resistance, because the adhesive may comprise nonconductive material.

According to an embodiment of the present invention, the system may further include a pair of press blocks configured for having the electrode tab of the cell stack arranged therebetween and applying a pressure, so as to bond the unit electrode tabs.

Accordingly, the pair of press blocks enables to apply pressure on the unit electrode tabs from opposite sides so as to firmly bond the unit electrode tabs with one another.

The press block may have a rounded corner at an edge thereof, which is supposed to directly contact the electrode tab during application of pressure, in order to protect the electrode tab from damages.

According to an embodiment of the present invention, the adhesive may comprise Polyvinylidene Fluoride - PVDF - and/or acrylic adhesive.

Accordingly, the present invention may improve chemical resistance, thermal stability, and mechanical strength of adhesive.

According to an embodiment of the present invention, the transfer unit may comprise one or more vacuum holes for absorbing the unit electrode cell.

Accordingly, the unit electrode cell can be picked up and moved to a downstream process position with minimal contact with the transfer unit, and it may further help preventing or reducing damages to the unit electrode cell.

According to an embodiment of the present invention, the one or more vacuum holes may be located at a center area of the transfer unit.

According to an embodiment of the present invention, the control unit may be configured to, when the transfer unit picks up the respective one of the plurality of unit electrode cells, control the transfer unit to be placed such that the one or more vacuum holes are located at a center of the unit electrode cell.

A further aspect of the present invention is directed to a method for manufacturing a secondary battery assembly. The method may include: sequentially stacking, on a stacking table, a plurality of unit electrode cells having a unit electrode tab on top of one another, thereby forming a cell stack having an electrode tab; and spraying adhesive on at least a part of the unit electrode tab of the unit electrode cell placed at a top of the cell stack on the stacking table. The adhesive-spraying step may be carried out after one unit electrode cell is placed on the stacking table and before a next unit electrode cell is placed.

Accordingly, the present invention enables the unit electrode tabs of the unit electrode cells to be bonded together, to thereby form an electrode tab of the stack cell in a safe and secure manner, without damages.

According to an embodiment of the present invention, the adhesive may be sprayed along a line perpendicular to a direction the unit electrode tab protrudes from the unit electrode cell.

Therefore, the adhesive can be sprayed at an area of the unit electrode tab, which is located apart from both the lead connection area and the edge of the separator. In other words, the adhesive can be sprayed on the unit electrode tab, in-between the lead connection area and the separator, securing a certain distance from the lead connection area and, at the same time, from the separator.

According to an embodiment of the present invention, said at least a part of the unit electrode tab may exclude a part on which a lead is to be formed.

Therefore, the present invention improves an electrical property of connection between the electrode tab and a lead/an external battery terminal. The connection is avoided from having a high electrical resistance, because the adhesive may comprise nonconductive material.

According to an embodiment of the present invention, the method may further include pressing the electrode tab of the cell stack by applying pressure by a pair of press blocks, to thereby bond the unit electrode tabs.

Accordingly, the pair of press blocks enables to apply a pressure on the electrode tab from opposite sides, so as to firmly bond the unit electrode tabs with one another.

According to an embodiment of the present invention, the method may be performed by the system having the adhesive comprising Polyvinylidene Fluoride - PVDF - and/or acrylic adhesive.

Accordingly, the present invention may improve chemical resistance, thermal stability, and mechanical strength of the adhesive.

According to an embodiment of the present invention, the method may further include picking up a respective one of the plurality of unit electrode cells by a transfer means applying vacuum force.

Accordingly, the unit electrode cell can be picked up and moved to a downstream process position with minimal contact with the transfer unit, and it may further help preventing or reducing damages to the unit electrode cell.

When manufacturing a secondary battery assembly by using the apparatus or method in accordance with the present invention, a damage or a defect in an electrode tab of the stack cell can be avoided or reduced.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: schematically illustrates a system for manufacturing a secondary battery in accordance with the related art;
- Figs. 2a and 2b: schematically illustrate a system for manufacturing a secondary battery in accordance with an embodiment of the present invention;
- Figs. 3 and 4: schematically illustrate the process of spraying adhesive on a part of the unit electrode tab, in accordance with the embodiment of Fig. 2b;
- Figs. 5 and 6: schematically illustrate a system for manufacturing a secondary battery in accordance with an embodiment of the present invention.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, a system and a method for manufacturing a secondary battery assembly in accordance with the present invention will be described in detail with reference to the accompanying drawings.

A secondary battery assembly may comprise a positive electrode, a separator, and a negative electrode.

The positive and negative electrode may be manufactured as a form of sheet, respectively. An electrode sheet may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a positive active material. For example, one or more of graphite, lithium titanate, and silicon-based materials may be used as a negative active material.

The current collector layer may be a thin metal foil designed to conduct electric current between an electrochemical active material and an external circuit of the battery. For example, an aluminum layer may be used for the positive current collector, while a copper layer may be used for the negative current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

The separator is for physically isolating the positive and negative electrodes from each other while allowing a flow of ions between them. The separator is normally composed of a thin and porous material. The separator prevents short circuits, allows ion flows, and ensures mechanical stability by supporting an electrode assembly, helping to maintain the integrity of the battery' internal structure during operation. The material of the separator requires properties of chemical stability, mechanical strength, and low cost. It may further require a relatively low melting point, which can provide a safety mechanism by shutting down the battery if it overheats. For example, a thin Polypropylene (PP) layer, a thin layer of ceramic coated separator layer, a nonwoven fabric layer, or a composite layer of different materials, such as polymers and ceramic, to optimize the performance characteristics like mechanical strength, thermal stability, and electrolyte wettability, may be used for the separator. The selection of separator depends on the specific requirements of specification of a secondary battery.

A process called notching may be performed on the electrode sheet, in the non-coated portion for forming a unit electrode tab. During the notching process, a portion of the non-coated portion is selectively removed or cut to thereby form a unit electrode tab in the non-coated portion. The process may be carried out by using precision tools, such as lasers or mechanical dies. The unit electrode tab is a non-coated portion of the current collector layer, remaining after the notching process, for attachment to an electrode lead. The electrode lead may be a strip of metal for being used to connect an electrode tab of an electrode assembly to an external battery terminal. The plurality of unit electrode tabs may be welded together to form an electrode tab of the electrode assembly. The unit electrode tab may be formed in a specific shape, including rectangular, U-shaped, or V-shaped cuts, in order to optimize the attachment to the electrode lead and ensure a good electrical connection. Depending on the type of the electrode assembly, however, the electrode tab can be directly connected to an external battery terminal without requiring an electrode lead.

After the notching process, cutting of the electrode sheet may be performed for the stack-type electrode assembly. The positive and negative electrode sheets are cut into precise shapes and sizes suitable for stacking. Optionally, the separator may be also cut to a predetermined size appropriate for the cut unit electrodes.

In a stacking process, the prepared positive electrode, separator, and negative electrode are alternately stacked in a precise order, so that a layered structure can be obtained, in which the positive electrode and the negative electrode are separated from each other by a separator. Meanwhile, the stacking process may be also carried out by using pre-assembled unit electrode cells, instead of stacking individual electrodes and separator.

The unit electrode cell may have a laminated structure including one or more of layers of a positive electrode/a separator/a negative electrode. However, the laminated structure of a unit electrode cell is not limited thereto. For example, the unit electrode cell may be an A-type bi-cell having a laminated structure of a positive electrode/a separator/a negative electrode/a separator/a positive electrode or a C-type bi-cell having a laminated structure of a negative electrode/separator/a positive electrode/a separator/a negative electrode. Further, the unit electrode cell may be a Mono-cell having a laminated structure of a positive electrode/a separator/a negative electrode/a separator. Furthermore, the unit electrode cell may be a Half-cell having a laminated structure of a separator/a negative electrode/a separator.

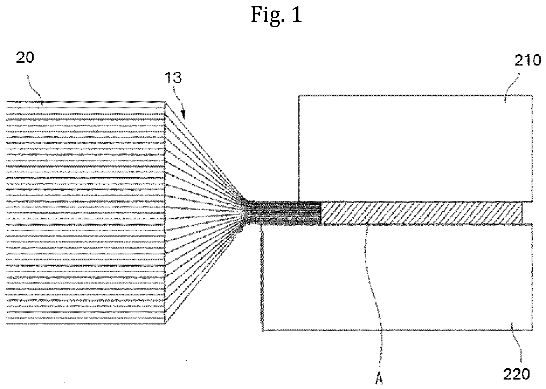

FIG. 1 schematically illustrates an exemplary apparatus for manufacturing a secondary battery, particularly for manufacturing a cell stack 20 to form an electrode assembly, in accordance with the related art. The apparatus in Fig. 1 particularly shows the process of forming an electrode tab of the cell stack 20.

Referring to FIG. 1, the cell stack 20 comprises a plurality of unit electrode cells, each of which is provided with a unit electrode tab at one end thereof. Respective ones of the unit electrode tabs of the plurality of unit electrode cells are gathered together and welded to one another. The resulting welded electrode tab 13 may be, in one of the subsequent processes, connected to an electrode lead or directly to an external battery terminal. The cell stack 20 is to be accommodated in a battery case in a sealed state, such that the cell stack 20 may be electrically connected to the external battery terminal directly through its electrode tab 13 or via the electrode lead.

The plurality of unit electrode tabs is, once gathered together, subjected to a welding process, typically called "pre-welding", by using a horn 210 and an anvil 220. To be specific, a welding target portion A of the plurality of unit electrode tabs is placed on an anvil 220, a horn 210 being placed on top of the welding target portion A. Then the horn 210 and the anvil 220 apply high-frequency vibration, e.g., generated by an ultrasonic wave having a frequency of about 20 kHz. The vibration energy is converted into thermal energy within the plurality of unit electrode tabs, thereby welding the unit electrode tabs with one another, forming a welded electrode tab 13.

The vibration force generated by the horn 210 and the anvil 220 can be applied in the horizontal direction, in which case the welded electrode tab 13 - particularly inner layers thereof - can be deformed and damaged mainly due to interaction of different frictional forces exerted between layers.

Accordingly, it would be advantageous to develop a technology capable of addressing the above technical problem, by reducing or preventing damages to an electrode tab during the pre-welding process using a horn and an anvil.

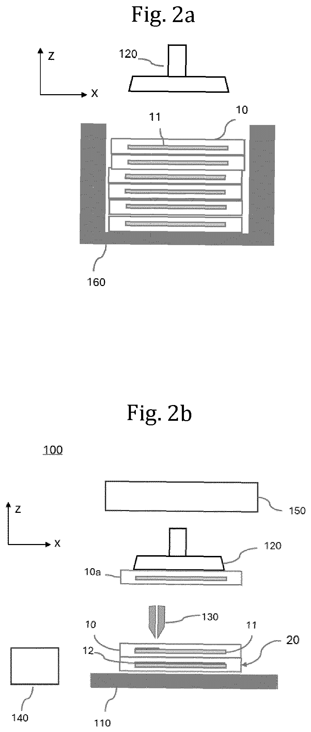

Figs. 2a and 2b schematically illustrate a system for manufacturing a secondary battery in accordance with one embodiment of the present invention. Particularly, the system may be suitable for forming an electrode tab of an electrode assembly without applying vibration force, which can cause deformation or damage to the electrode tab to be formed.

A tray 160 accommodates therein a plurality of unit electrode cells 10. However, the embodiment is not limited thereto. Any equipment or method may be employed for supplying a plurality of unit electrode cells 10 to be used in the system 100. For example, instead of the tray 160, the system 100 may employ a conveyor (not shown) for supplying a plurality of unit electrode cells.

The system 100 of the present embodiment may further include a stacking table 110 configured to allow a plurality of unit electrode cells 10 stacked thereon, to thereby form a cell stack 20. A transfer unit 120 may be additionally provided, being configured to sequentially transfer the plurality of unit electrode cells 10 from the tray 160, conveyor, etc. to the stacking table 110. The transfer unit 120 picks up a respective one of the plurality of unit electrode cells 10 and, after moving, places it on top of either the stacking table 110 or the (partial) cell stack 20 already placed on the stacking table 110. The transfer unit 120 may be configured to pick up the unit electrode cell 10 by applying vacuum force. By using the vacuum force, the unit electrode cell can be picked up and moved with minimal contact with the transfer unit. This may further help preventing or reducing damages to the unit electrode cell. The transfer unit may include one or more vacuum holes for absorbing the unit electrode cell. The vacuum hole(s) may be located at the center area of the transfer unit. The control unit may control the transfer unit, while it picks up the unit electrode cells, to be positioned such that the vacuum hole(s) can be located at the center area of the unit electrode cell.

The system 100 in accordance with the present embodiment may further include a spray unit 130 configured to spray adhesive 12 on at least a part of the electrode tab 11 of the unit electrode cell 10 placed at the top of the (partial) cell stack 20. A control unit 140 may be provided, being configured to control the spray unit 130 to perform the adhesive-spraying operation once a new unit electrode cell 10 is placed on the stacking table 110 or on top of the (partial) cell stack 20 already built up on the stacking table 110.

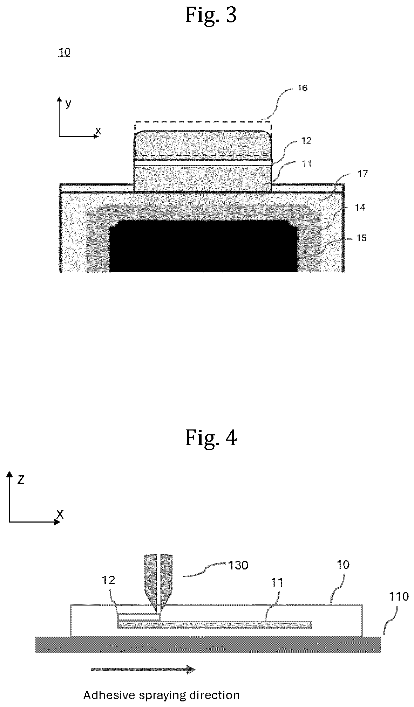

Referring to Figs. 3 and 4, the unit electrode cell 10 may comprise a positive electrode 15, a negative electrode 14, and a separator 17 disposed therebetween. The negative electrode 14 may have a main body, mainly composed of the coated portion. The main body of the negative electrode 14 has a planar area larger than that of the positive electrode 15, so as to completely cover the main body of the positive electrode 15. Both the negative electrode 14 and the positive electrode 15 respectively have a unit electrode tab 11 protruding at one side of their own main body, as shown in Fig. 4.

The adhesive spray unit 130 may be configured to spray the adhesive 12 on at least a part of the unit electrode tab 11 along a line, x-axis, perpendicular to a direction the unit electrode tab 11 protrudes (y-axis) from the unit electrode cell 10.

The at least a part of the unit electrode tab 11 on which the adhesive 12 is to be sprayed preferably excludes an area 16 on which a lead (not shown) is subsequently to be attached. In the meantime, the electrical connection between the welded electrode tab 13 and the lead may be made by using a laser irradiation.

The adhesive 12 may be preferably sprayed at an area of the unit electrode tab 11, which is located apart from both the lead connection area 16 and the edge of the separator 17. In other words, the adhesive 12 may be sprayed on the unit electrode tab 11, in-between the lead connection area 16 and the separator 17, securing a certain distance from the lead connection area 16 and, at the same time, from the separator 17. The adhesive may be sprayed along a straight line, so that the adhesive on the unit electrode tab 11 has a linear shape. However, the shape may not be limited thereto. For example, the adhesive may be sprayed like scattered dots.

The adhesive 12 may comprise Polyvinylidene Fluoride-PVDF or acrylic adhesive.

As already described above, it is preferable to secure a certain distance between the adhesive and the lead connection area 16. However, the adhesive 12 may be sprayed at an area including the lead connection area 16, insofar as an appropriate type of adhesive is used. For example, the adhesive 12 may comprise an electrically conductive epoxy containing metal particles.

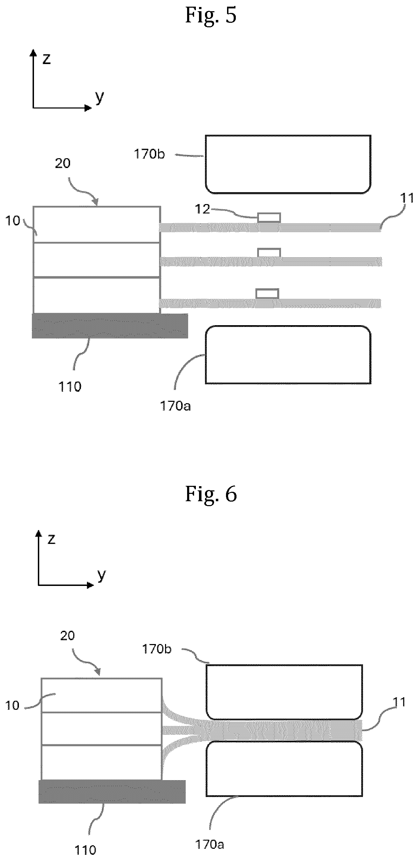

Referring to Figs 5 and 6, the system 100 may further include a pair of press blocks 170a, 170b. The press blocks 170a, 170b may be configured for having the electrode tab of the cell stack 20 arranged therebetween, the individual unit electrode tabs 11 forming the electrode tab respectively having the adhesive 12 sprayed thereon. The pair of press blocks 170a, 170b are configured for applying pressure on the electrode tab from opposite sides, so as to firmly bond the unit electrode tabs with one another.

The press blocks 170a, 170b may optionally have a rounded corner at an edge thereof, which is supposed to directly contact the electrode tab during application of pressure, in order to protect the electrode tab from damages.

A further aspect of the present invention relates to a method for manufacturing a secondary battery assembly. A plurality of unit electrode cells 10 may be accommodated in a tray 160, a conveyor, etc., to be supplied to the subsequent process. The method may include sequentially stacking, on a stacking table 110, a plurality of unit electrode cells 10 on top of one another, thereby forming a cell stack 20. Herein, each of the unit electrode cells 10 has a unit electrode tab 11; and as a result, the cell stack 20 obtained by stacking the plurality of unit electrode cells 10 is also to have an electrode tab. A transfer unit 120 may transfer the plurality of unit electrode cells 10 from the tray 160, conveyor, etc. to the stacking table 110. The transfer unit 120 picks up a respective one of the plurality of unit electrode cells 10 and, after moving, places it on top of either the stacking table 110 or the (partial) cell stack 20 already placed on the stacking table 110. The method may further include spraying adhesive 12 on at least a part of the unit electrode tab 11 of the unit electrode cell 10 placed at the top of the (partial) cell stack 20 on the stacking table 110. The adhesive-spraying step is carried out after one unit electrode cell 10 is placed on the stacking table 110 and before the next unit electrode cell 10a is placed.

In adhesive-spraying, the adhesive may be sprayed along a line perpendicular to a direction the unit electrode tab 11 protrudes from the unit electrode cell 10. The spaying of adhesive on at least a part of the unit electrode tab 11 preferably excludes an area 16 on which a lead is subsequently to be attached. In the meantime, the electrical connection between the welded electrode tab 13 and the lead may be made by using a laser irradiation. In other words, the adhesive 12 may be sprayed on the unit electrode tab 11, in-between the lead connection area 16 and the separator 17, securing a certain distance from the lead connection area 16 and, at the same time, from the separator 17. The adhesive may be sprayed along a straight line, so that the adhesive on the unit electrode tab 11 has a linear shape.

The method may further include pressing the electrode tab of the cell stack 20 by applying pressure by a pair of press blocks 170a, 170b, to thereby bond the unit electrode tabs. The individual unit electrode tabs 11 forming the electrode tab respectively have the adhesive 12 sprayed thereon. The pair of press blocks 170a, 170b may apply pressure on the electrode tab from opposite sides to firmly bond the unit electrode tabs with one another.

### LIST OF REFERENCE SIGNS

- 10: unit electrode cell
- 11: unit electrode tab
- 12: adhesive
- 13: welded electrode tab
- 14: negative electrode
- 15: positive electrode
- 16: lead connection area, a part 16 on which a lead is to be formed
- 17: separator
- 20: cell stack
- 100: system
- 110: stacking table
- 120: transfer unit
- 130: spray unit
- 140: control unit
- 150: stacking vision
- 160: tray
- 170a, 170b: press block

## Claims

1. A system for manufacturing a secondary battery assembly, comprising:
a stacking table configured to have a plurality of unit electrode cells having a unit electrode tab stacked thereon, to thereby form a cell stack with an electrode tab;
a transfer unit configured to sequentially pick up a respective one of the plurality of unit electrode cells, move it to the stacking table and place on top of one another;
an adhesive spray unit configured to spray adhesive on at least a part of the unit electrode tab of the unit electrode cell placed at a top of the cell stack on the stacking table; and
a control unit configured to control the adhesive spray unit to perform the adhesive-spraying operation after one unit electrode cell is placed on the stacking table and before a next unit electrode cell is placed.

2. The system of claim 1, wherein the adhesive spray unit is configured to spray the adhesive along a line perpendicular to a direction the unit electrode tab protrudes from the unit electrode cell.

3. The system of claim 1 or 2, wherein said at least a part of the unit electrode tab excludes a part on which a lead is to be formed.

4. The system of any one of the preceding claims, further comprising a pair of press blocks configured for having the electrode tab of the cell stack arranged therebetween and applying a pressure, so as to bond the unit electrode tabs.

5. The system of any one of the preceding claims, wherein the adhesive comprises Polyvinylidene Fluoride - PVDF - and/or acrylic adhesive.

6. The system of any one of the preceding claims, wherein the transfer unit comprises one or more vacuum holes for absorbing the unit electrode cell.

7. The system of claim 6, wherein the one or more vacuum holes are located at a center area of the transfer unit.

8. The system of claim 7, wherein the control unit is configured to, when the transfer unit picks up the respective one of the plurality of unit electrode cells, control the transfer unit to be placed such that the one or more vacuum holes are located at a center area of the unit electrode cell.

9. A method for manufacturing a secondary battery assembly, comprising:
sequentially stacking, on a stacking table, a plurality of unit electrode cells having a unit electrode tab on top of one another, thereby forming a cell stack having an electrode tab; and
spraying adhesive on at least a part of the unit electrode tab of the unit electrode cell placed at a top of the cell stack on the stacking table,
wherein the adhesive-spraying step is carried out after one unit electrode cell is placed on the stacking table and before a next unit electrode cell is placed.

10. The method of claim 9, wherein the adhesive is sprayed along a line perpendicular to a direction the unit electrode tab protrudes from the unit electrode cell.

11. The method of claim 9 or 10, wherein said at least a part of the unit electrode tab excludes a part on which a lead is to be formed.

12. The method of any one of claims 9 to 11, further comprising pressing the electrode tab of the cell stack by applying pressure by a pair of press blocks, to thereby bond the unit electrode tabs.

13. The system of any one of claims 9 to 12, wherein the adhesive comprises Polyvinylidene Fluoride - PVDF - and/or acrylic adhesive.

14. The method of any one of claims 9 to 13, further comprising picking up a respective one of the plurality of unit electrode cells by a transfer means applying vacuum force.

## Patentansprüche

1. System zur Herstellung einer Sekundärbatterieanordnung, umfassend:
einen Stapeltisch, der so konfiguriert ist, dass eine Mehrzahl von Einheitselektrodenzellen, die eine Einheitselektrodenlasche aufweisen, darauf gestapelt wird, wodurch ein Zellstapel mit einer Elektrodenlasche gebildet wird;
eine Transfereinheit, die so konfiguriert ist, dass sie jeweils eine der Mehrzahl von Einheitselektrodenzellen nacheinander ergreift, diese zu dem Stapeltisch bewegt und übereinander platziert;
eine Klebstoffsprüheinheit, die so konfiguriert ist, dass sie Klebstoff auf zumindest einen Teil der Einheitselektrodenlasche der Einheitselektrodenzelle sprüht, die oben auf dem Zellstapel auf dem Stapeltisch platziert wurde;
eine Steuereinheit, die so konfiguriert ist, dass sie die Klebstoffsprüheinheit so steuert, dass diese den Klebstoffsprühvorgang durchführt, nachdem eine Einheitselektrodenzelle auf dem Stapeltisch platziert wurde und bevor eine nächste Einheitselektrodenzelle platziert wird.

2. System nach Anspruch 1, wobei die Klebstoffsprüheinheit so konfiguriert ist, dass sie den Klebstoff entlang einer Linie aufsprüht, die senkrecht zu einer Richtung verläuft, in der die Einheitselektrodenlasche von der Einheitselektrodenzelle vorsteht.

3. System nach Anspruch 1 oder 2, wobei der zumindest eine Teil der Einheitselektrodenlasche einen Teil ausschließt, auf dem ein Leiter ausgebildet werden soll.

4. System nach einem der vorangehenden Ansprüche, weiterhin umfassend ein Paar von Pressblöcken, die so konfiguriert sind, dass die Elektrodenlasche eines Zellstapels zwischen ihnen angeordnet wird und Druck ausgeübt wird, um die Einheitselektrodenlaschen miteinander zu verbinden.

5. System nach einem der vorangehenden Ansprüche, wobei der Klebstoff Polyvinylidenfluorid (PVDF) und/oder einen Acrylklebstoff umfasst.

6. System nach einem der vorangehenden Ansprüche, wobei die Transfereinheit ein oder mehrere Vakuumlöcher zum Aufnehmen der Einheitselektrodenzelle umfasst.

7. System nach Anspruch 6, wobei sich das eine oder die mehreren Vakuumlöcher in einem zentralen Bereich der Transfereinheit befinden.

8. System nach Anspruch 7, wobei die Steuereinheit so konfiguriert ist, dass sie, wenn die Transfereinheit jeweils eine der Mehrzahl von Einheitselektrodenzellen ergreift, die Transfereinheit so steuert, dass diese so positioniert wird, dass sich das eine oder die mehreren Vakuumlöcher in einem zentralen Bereich der Einheitselektrodenzelle befinden.

9. Verfahren zur Herstellung einer Sekundärbatterieanordnung, umfassend:
sequenzielles Stapeln einer Mehrzahl von Einheitselektrodenzellen mit einer Einheitselektrodenlasche auf einem Stapeltisch übereinander, wodurch ein Zellstapel mit einer Elektrodenlasche gebildet wird; und
Aufsprühen von Klebstoff auf zumindest einen Teil der Einheitselektrodenlasche der Einheitselektrodenzelle, die oben auf dem Zellstapel auf dem Stapeltisch platziert ist,
wobei der Schritt des Aufsprühens des Klebstoffs durchgeführt wird, nachdem eine Einheitselektrodenzelle auf dem Stapeltisch platziert wurde und bevor eine nächste Einheitselektrodenzelle platziert wird.

10. Verfahren nach Anspruch 9, wobei der Klebstoff entlang einer Linie aufgesprüht wird, die senkrecht zu einer Richtung verläuft, in der die Einheitselektrodenlasche von der Einheitselektrodenzelle vorsteht.

11. Verfahren nach Anspruch 9 oder 10, wobei der zumindest eine Teil der Einheitselektrodenlasche einen Teil ausschließt, auf dem ein Leiter gebildet werden soll.

12. Verfahren nach einem der Ansprüche 9 bis 11, weiterhin umfassend das Pressen der Elektrodenlasche des Zellstapels durch Ausüben von Druck mittels eines Paars von Pressblöcken, um dadurch die Einheitselektrodenlaschen zu verbinden.

13. System nach einem der Ansprüche 9 bis 12, wobei der Klebstoff Polyvinylidenfluorid (PVDF) und/oder einen Acrylklebstoff umfasst.

14. Verfahren nach einem der Ansprüche 9 bis 13, weiterhin umfassend das Ergreifen jeweils einer der Mehrzahl von Elektrodenzellen mittels einer Transfereinrichtung unter Anwendung einer Vakuumkraft.

## Revendications

1. Système de fabrication d'un ensemble de batterie secondaire, comprenant :
une table d'empilage prévue pour comprendre une pluralité de cellules d'électrode unitaire présentant une languette d'électrode unitaire empilée, formant ainsi une pile de cellules avec une languette d'électrode ;
une unité de transfert prévue pour prélever séquentiellement une cellule respective parmi la pluralité de cellules d'électrode unitaire, déplacer celle-ci vers la table d'empilage et la disposer en superposition ;
une unité de pulvérisation d'adhésif prévue pour pulvériser un adhésif sur au moins une partie de la languette d'électrode unitaire de la cellule d'électrode unitaire disposée au sommet de la pile de cellules sur la table d'empilage ; et
une unité de commande prévue pour commander l'unité de pulvérisation d'adhésif afin d'exécuter l'opération de pulvérisation d'adhésif après disposition d'une cellule d'électrode unitaire sur la table d'empilage, et avant disposition de la cellule d'électrode unitaire suivante.

2. Système selon la revendication 1, où l'unité de pulvérisation d'adhésif est prévue pour pulvériser l'adhésif le long d'une ligne perpendiculaire à une direction de saillie de la languette d'électrode unitaire à partir de la cellule d'électrode unitaire.

3. Système selon la revendication 1 ou la revendication 2, où au moins une partie de la languette d'électrode unitaire exclut une partie sur laquelle un conducteur doit être formé.

4. Système selon l'une des revendications précédentes, comprenant en outre une paire de blocs de pression prévus de sorte que la languette d'électrode de la pile de cellules leur est intercalée, et pour appliquer une pression permettant de coller les languettes d'électrode unitaire.

5. Système selon l'une des revendications précédentes, où l'adhésif comprend du polyfluorure de vinylidène - PVDF - et/ou un adhésif acrylique.

6. Système selon l'une des revendications précédentes, où l'unité de transfert comprend un ou plusieurs orifices d'aspiration pour absorber la cellule d'électrode unitaire.

7. Système selon la revendication 6, où le ou les orifices d'aspiration sont présentés dans une zone centrale de l'unité de transfert.

8. Système selon la revendication 7, où, lorsque l'unité de transfert prélève la cellule respective parmi la pluralité de cellules d'électrode unitaire, l'unité de commande est prévue pour commander le placement de l'unité de transfert de sorte que le ou les orifices d'aspiration sont présentés dans une zone centrale de la cellule d'électrode unitaire.

9. Procédé de fabrication d'un ensemble de batterie secondaire, comprenant :
l'empilage séquentiel, sur une table d'empilage, d'une pluralité de cellules d'électrode unitaire ayant une languette d'électrode unitaire, formant ainsi une pile de cellules ayant une languette d'électrode ; et
la pulvérisation d'un adhésif sur au moins une partie de la languette d'électrode unitaire de la cellule d'électrode unitaire disposée au sommet de la pile de cellules sur la table d'empilage, l'étape de pulvérisation d'adhésif étant exécutée après disposition d'une cellule d'électrode unitaire sur la table d'empilage, et avant disposition de la cellule d'électrode unitaire suivante.

10. Procédé selon la revendication 9, où l'adhésif est pulvérisé le long d'une ligne perpendiculaire à une direction de saillie de la languette d'électrode unitaire à partir de la cellule d'électrode unitaire.

11. Procédé selon la revendication 9 ou la revendication 10, où au moins une partie de la languette d'électrode unitaire exclut une partie sur laquelle un conducteur doit être formé.

12. Procédé selon l'une des revendications 9 à 11, comprenant en outre la pression de la languette d'électrode de la pile de cellules par application d'une pression par une paire de blocs de pression, pour coller ainsi les languettes d'électrode unitaire.

13. Système selon l'une des revendications 9 à 12, où l'adhésif comprend du polyfluorure de vinylidène - PVDF - et/ou un adhésif acrylique.

14. Procédé selon l'une des revendications 9 à 13, comprenant en outre le prélèvement d'une cellule respective parmi la pluralité de cellules d'électrode unitaires par un moyen de transfert appliquant une force d'aspiration.
